# EUROPEAN PATENT SPECIFICATION

(11) **EP 1 521 813 B1**
(45) Date of publication and mention of the grant of the patent: **08.03.2006**
(21) Application number: 03733751.6
(22) Date of filing: 17.06.2003
(51) Int. Cl.: C09K 3/00, C10M 173/02, E21B 43/22, F17D 1/17

(54) **A DRAG-REDUCING AGENT FOR USE IN INJECTION WATER AT OIL RECOVERY**
STRÖMUNGSBESCHLEUNIGENDER ZUSATZ FÜR INJEKTIONSWASSER BEI DER ÖLGEWINNUNG
AGENT REDUCTEUR DE TRAINEE UTILISE DANS L'INJECTION D'EAU LORS DE LA RECUPERATION D'HUILE SECONDAIRE

(30) Priority: 15.07.2002 SE 0202198
(43) Date of publication of application: 13.04.2005
(73) Proprietor: Akzo Nobel N.V., 6824 AB Arnhem (NL)
(72) Inventor: HELLSTEN, Martin, S-444 05 Ödsmal (SE); OSKARSSON, Hans, S-444 41 Stenungsund (SE)
(74) Representative: Schalkwijk, Pieter Cornelis
(86) International application number: PCT/SE2003/001015
(87) International publication number: WO 2004/007630

(56) References cited:
- WO-A1-96/28527
- US-A- 6 043 203

## Description

The present invention relates to the use of a drag-reducing agent containing a zwitterionic surfactant and an anionic surfactant in waters containing electrolytes. The agent is very efficient at low contents even in waters having a high electrolyte content and is suitable to be utilized in injection waters at oil recovery.

A crude oil reservoir is formed by a stratum of porous rock or sand covered by a rock layer difficult for the crude oil to penetrate. When the pressure in an oil reservoir declines, it is quite common to inject water, for example sea-water, into the oil well to maintain the pressure and the recovery of oil on a high level. However, the injection of water is hampered by the flow resistance (drag) in the conduits and in the oil reservoir and in order to reduce the drag, it has been suggested to add a drag-reducing additive to the injection water.

Thus, EP 116 779 discloses that copolymers of acrylamide and alkylpoly(etheroxy)acrylate have drag-reducing properties in brine solution. In US 4 489 180 it is described a drag-reducing agent comprising of a complex polymer of a mixture of a cationic polymer and an anionic polymer. The addition of the drag-reducing additive in Example 2 is 500 ppm. Although poly(amide acrylate) polymers may have good drag-reducing effect at a low concentration, it has also been observed that the polymers have a tendency to form aggregates in the oil reservoir, which causes a substantial drop of the flow of injection water.

It is also known, e.g. from WO 92/13925 and WO 96/28527, that surfactants forming rod-like micelles have good drag-reducing effects. Thus, WO 96/28527 describes a drag-reducing agent comprising at least one betaine surfactant having an alkyl or acyl group with 10-24 carbon atoms in combination with an anionic surfactant having the general structure R₁-B
where R₁ is a hydrocarbon group with 10-24 carbon atoms and
B is a group 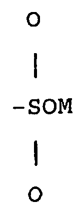 or a group 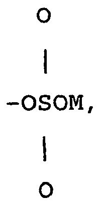 in which M is a cationic, preferably monovalent group, in a proportion between the betaine surfactant and the anionic surfactant of from 20:1 to 1:2. Preferably the betaine surfactant has the general formula 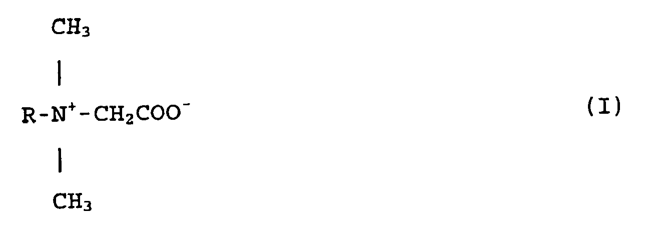
where R is the alkyl group or the group R'NC₃H₆- where R' is the acyl group. However, the amount of the surfactant necessary to obtain an essential reduction of the drag has shown to be above 500 ppm of the water. In addition, the formation of micelles and therewith the reduction of drag is expected to be negatively affected by the presence of large amounts of electrolytes. Thus, this type of drag-reducing agents has not at all been regarded as suitable to be used in injection waters, especially not when the injection water is based on sea-water.

It has now been found that a drag-reducing agent containing certain types of zwitterionic surfactants has a remarkably good drag-reducing effect at a concentration of 50-400 ppm, preferably 60-300 ppm, at large temperature intervals within the range of 2-70°C even in water with an electrolyte content of 0.01-7%, suitably 0.05-6% by weight. Thus, the drag-reducing agent according to the invention can also with a high efficacy and in low amounts be used in brackish water and sea-water with an electrolyte content of 0.3 to 6% by weight. The surfactants in the drag-reducing agent are also readily soluble in the water at the temperatures in the oil reservoir and do not cause any reduction of the injection water flow due to reduced permeability. On the contrary, tests have shown that the presence of the drag-reducing agents of the inventions in the injection water reduces the pressure drop with about 10%, when measured over a plug of calcium carbonate with a permeability of 1.3 mDarcy at a constant flow rate.

The drag-reducing agent for use according to the invention comprises
a) a zwitterionic surfactant of the formula 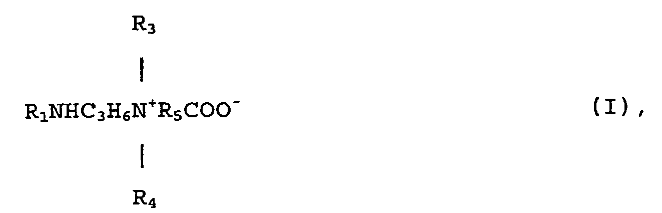
   where R₁ is acyl group with 12-16 carbon atoms, R₃ and R₄ are independently of each other an alkyl group of 1-4 carbon atoms or an hydroxyalkyl group of 2-4 carbon atoms and R₅ is an alkylene group of 1-4 carbon atoms, preferably CH₂ or a group 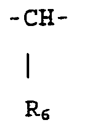
   where R₆ is an alkyl group of 1-3 carbon atoms, and
b) a zwitterionic surfactant of the formula 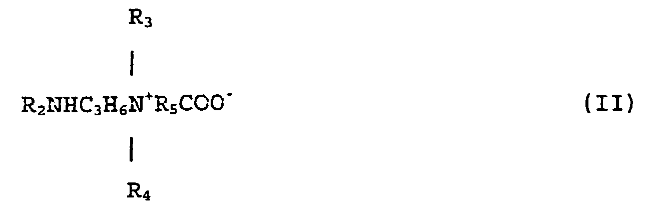 where R₂ is an acyl group with 18-22 carbon atoms, and R₃, R₄ and R₅ have the meanings mentioned above, and
c) an anionic surfactant of the formulae

   R₇(OA)ₙB or R₇E

   or a mixture thereof, where R₇ is an aliphatic group of 8-14, preferably 10-12, carbon atoms, A is an alkylene group having 2-4 carbon atoms, n is a number from 1 to 10, B is a sulphate group OSO₃M, E is a sulphate group OSO₃M or a sulphonate group -SO₃M and M is a cationic, preferably monovalent group; the weight of a), b) and c) being 20-95% by weight, 0-70% by weight and 1-50% by weight, respectively, based on the total amount of a), b) and c).

In the zwitterionic surfactant of formulae I and II, R₃ and R₄ are independently of each other suitably methyl or hydroxyethyl, and R₅ is suitably methylene. Preferably the zwitterionic surfactants have the formula 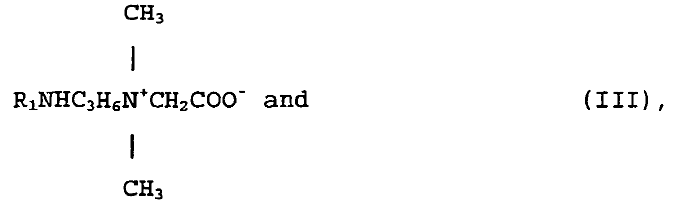 and 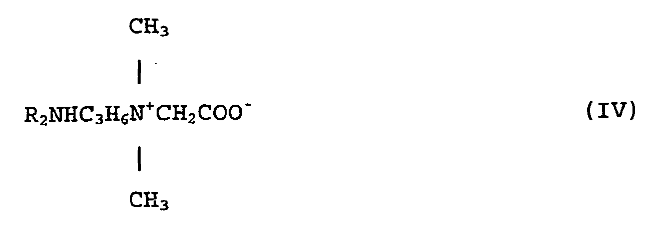
where R₁ and R₂ have the meanings mentioned above.

The group R₁ is suitably a linear C-12 or C-14 acyl, but also branched acyl groups could advantageously be used. The acyl group R₂ can be either saturated or unsaturated but unsaturated acyl groups are preferred. Suitably the acyl group R₂ is derived from vegetable oils, such as soy oil, olive oil, rapeseed oil, linseed oil; safflower oil, sun flower oil, cottonseed oil and tall oil.

The anionic surfactants for use according to the invention are well-known products and so are also their production methods. Preferred anionic surfactants are those where R₇ contains 10-12 carbon atoms and for many formulations lauryl sulphate, a lauryl (oxyethylene)₁₋₃ sulphates, or lauryl sulphonate, or a mixture thereof, is preferred.

Preferably the drag-reducing agent comprises the component a) in an amount of 20-85% by weight, the component b) in an amount of 10-70% by weight, and the component c) in an amount of 4-35% by weight, calculated on the total weight of a), b) and c).

Ordinary sea-water or brackish water have normally a temperature in the range of 5-35°C, while process-water, sometime also called production water, derived at least partially from the water in the production stream of oil and water from the oil well after the removal of the oil phase, normally has a temperature of 30-65°C.

Fortunately, the temperature window, where the drag-reducing effect is substantial can be regulated by the size of the group R₁. Thus R₁ preferably contains 12-14 carbon atoms, when the injection water is a seawater having a salt content of 2-6% and a temperature of 5-30°C, and 14-16 carbon atoms, suitably in combination with a zwitterionic surfactant of formula II, when the injection water is a production water based on a sea-water having a salt content of 2-6% and a temperature of 30-65°C.

Apart from the zwitterionic surfactant and anionic surfactants, the water-based system may contain a number of conventional components such as corrosion inhibitors and bactericides.

The present invention will now be further illustrated with the aid of the following examples.

### Example 1

The drag-reducing properties of different drag-reducing additives were evaluated in a synthetic sea-water containing 568 mmoles of chloride, 482 mmoles of sodium, 54 mmoles of magnesium, 28 mmoles of sulphate, 10 mmoles of calcium and 10 mmoles of potassium per liter water. In the evaluation test, 40 ml of the synthetic sea-water containing the drag-reducing additives were stirred in a 50 ml glass beaker with a magnetic stirrer at a constant speed of 700 r.p.m. and at different temperatures. The inner diameter of the beaker was 40 mm and the stirrer bar was 6 x 20 mm. The absence of a vortex in the water surface or a vortex of maximum 2 mm indicated a considerable reduction of the drag. Without addition of a drag-reducing agent, the vortex was 30 mm.

The following surfactants were used in the tests.
C12APB is a compound of formula I, where R₁ is a C₁₂ acyl, R₃ and R₄ are methyl and R₅ is methylene;
C14APB is a compound of formula I, where R₁ is a C₁₄ acyl, R₃ and R₄ are methyl and R₅ is methylene;
C16APB is a compound of formula I, where R₁ is a C₁₆ acyl, R₃ and R₄ are methyl and R₅ is methylene;
C18APB is a compound of formula II, where R₁ is a C₁₈ acyl derived from oleic acid, R₃ and R₄ are methyl and R₅ is a methylene;
LinAPB is a compound of formula II, where R₂ is an acyl derived from linseed oil, R₃ and R₄ are methyl and R₅ is methylene;
SoyAPB is a compound of formula II, where R₂ is an acyl derived from soy oil, R₃ and R₄ are methyl and R₅ is methylene;
CanAPB is a compound of formula II, where R₂ is an acyl derived from a rapeseed oil with a low content of erucic acid, R₃ and R₄ are methyl and R₅ is methylene;
C14B is an alkyl betaine of the formula C₁₄-alkylN⁺(CH₃)₂CH₂COO⁻;
C16B is an alkyl betaine of the formula C₁₆-alkylN⁺(CH₃)₂CH₂COO⁻;
C10S is a decyl sulphate
C12S is lauryl sulphate
C12EOS is lauryl di(oxyethylene) sulphate, and
C12S03 is a lauryl sulphonate.

In Table 1 below the combinations of zwitterionic surfactants and anionic surfactants, the amounts of the individual surfactants used and the temperature range where the vortex was 2 mm or less.

**Table 1 Combinations of zwitterionic and anionic surfactants and their temperature range with a considerable drag-reduction**

| **Test** | **Zwitterionic compound** | | **Zwitterionic compound** | | **Anionic compound** | | **Temp. range °C** |
|---|---|---|---|---|---|---|---|
| | **Type** | **Ppm** | **Type** | **ppm** | **Type** | **ppm** | |
| 1 | C12APB | 200 | - | - | C12S | 27 | 4-35 |
| 2 | C14APB | 200 | - | - | C12S | 30 | 16-46 |
| 3 | C14APB | 100 | - | - | C12S | 15 | 16-50 |
| 4 | C14APB | 200 | - | - | C12EOS | 45 | 12-45 |
| 5 | C14APB | 100 | - | - | C12EOS | 23 | 14-52 |
| 6 | C16APB | 200 | - | - | C12S | 25 | 30-66 |
| 7 | C16APB | 100 | - | - | C12S | 13 | 34-65 |
| 8 | C14APB | 100 | C18APB | 100 | C12S | 20 | 14-60 |
| 9 | C16APB | 100 | C18APB | 100 | C12EOS | 18 | 25-65 |
| 10 | C12APB | 50 | C14APB | 50 | C12EOS | 20 | 11-44 |
| 11 | C14APB | 50 | C18APB | 50 | C12S | 10 | 19-60 |
| 12 | C16APB | 50 | C18APB | 50 | C12EOS | 9 | 25-65 |
| 13 | C14APB | 100 | LinAPB | 100 | C12S | 32 | 4-49 |
| 14 | C14APB | 100 | LinAPB | 100 | C12EOS | 33 | 4-44 |
| 15 | C14APB | 100 | SoyAPB | 100 | C12S | 29 | 5-41 |
| 16 | C14APB | 100 | SoyAPB | 100 | C12EOS | 44 | 5-40 |
| 17 | C14APB | 50 | LinAPB | 50 | C12EOS | 16 | 7-42 |
| 18 | C16APB | 50 | LinAPB | 50 | C12S | 21 | 36-60 |
| 19 | C14APB | 58 | CanAPB | 18 | C12S | 14 | 6-50 |
| 20 | C14APB | 38 | CanAPB | 19 | C12S | 9 | 7-45 |
| 21 | C14APB | 100 | CanAPB | 100 | C10S | 39 | < 4-44 |
| 22 | C14APB | 50 | CanAPB | 50 | C10S | 25 | < 4-44 |
| 23 | C14APB | 140 | CanAPB | 60 | C12S03 | 35 | 4-48 |
| 24 | C14APB | 70 | CanAPB | 30 | C12S03 | 18 | 4-47 |
| A | C18APB | 200 | - | - | C12S | 20 | 27-49 |
| B | C18APB | 200 | - | - | C12EOS | 20 | 29-50 |
| C | C18APB | 100 | - | - | C12EOS | 10 | 40-51 |
| D | LinAPB | 100 | - | - | C12S | 15 | 20-30 |
| E | SoyAPB | 100 | - | - | C12S | 13 | No effect |
| F | C14B | 200 | - | - | C12EOS | 0-200 | No effect |
| G | C14B | 100 | LinAPB | 100 | C12EOS | 0-200 | No effect |
| H | C16B | 100 | LinAPB | 100 | C12S | 0-200 | No effect |
| I | C16B | 100 | LinAPB | 100 | C12EOS | 0-200 | No effect |

From the results obtained it is evident that an agent according to the invention has an excellent drag-reducing effect at dosages below 250 ppm.

### Example 2

Drag-reducing agents containing C14APB and CanAPB in equal amounts and C12S in varying amounts were tested in injection waters containing different amounts of the synthetic salt described in Example 1. In one test, production water from the North Sea was used. The tests were performed in the same manner as in Example 1. The following results were obtained.

**Table 2 Efficacy of drag-reducing agents in injection waters of different salt contents**

| **Test** | **C14APB+CanAPB ppm** | **C12S ppm** | **Salt content %** | **Temp. range °C** |
|---|---|---|---|---|
| 25 | 200 | 35 | 0.03 | < 5-58 |
| 26 | 100 | 18 | 0.015 | < 5-50 |
| 27 | 200 | 35 | 0.6 | < 5-47 |
| 28 | 100 | 40 | 0.6 | < 5-46 |
| 29 | 200 | 22 | 1.0 | < 5-46 |
| 30 | 100 | 40 | 1.0 | < 5-46 |
| 31 | 200 | 35 | 3.0 | < 5-47 |
| 32 | 100 | 18 | 3.0 | < 5-47 |
| 33 | 200 | 38 | ∼ 3.0 ¹⁾ | < 5-51 |
| K | 200 | 0-200 | 0.00 | No effect |

| | | | | |
|---|---|---|---|---|
| ¹⁾ Production water from the North Sea containing less than 20 ppm of hydrocarbons | | | | |

The results clearly show that the drag-reducing agents of the present invention have an essential effect in injection waters with different contents of electrolyte.

## Claims

1. Use of a drag-reducing agent containing
a) a zwitterionic surfactant of the formula 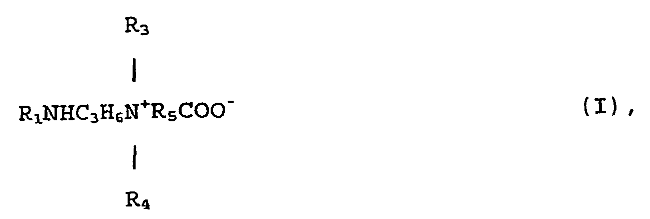
where R₁ is acyl group with 12-16 carbon atoms, R₃ and R₄ are independently of each other an alkyl group of 1-4 carbon atoms or an hydroxyalkyl group of 2-4 carbon atoms and R₅ is an alkylene group of 1-4 carbon atoms, preferably CH₂ or a group 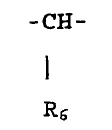
where R₆ is an alkyl group of 1-3 carbon atoms,
b) a zwitterionic surfactant of the formula 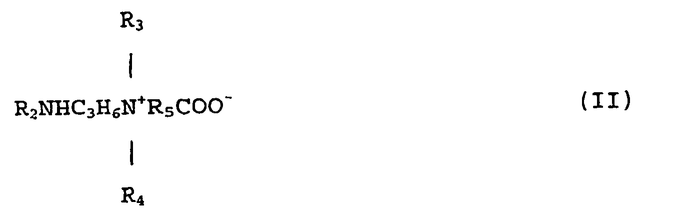
where R₂ is an acyl group with 18-22 carbon atoms, and R₃, R₄ and R₅ have the meanings mentioned above, and
c) an anionic surfactant of the formulae
R₇(OA)ₙB or R₇E
or a mixture thereof, where R₇ is an aliphatic group of 8-14 carbon atoms, A is an alkylene group having 2-4 carbon atoms, n is a number from 1 to 10, B is a sulphate group OSO₃M, E is a sulphate group OSO₃M or a sulphonate group -SO₃M and M is a cationic, preferably monovalent group;
the weight of a), b) and c) being 20-95% by weight, 0-70% by weight and 1-50% by weight, respectively, based on the total amount of a), b) and c);
in an amount of a), b) and c) of 50-400 ppm in water having an electrolyte content from 0.01-7% by weight.

2. Use according to claim 1, wherein the component a) and b) are present in an amount of 20-85% by weight and 10-70% by weight, respectively.

3. Use according to claim 1 or 2, wherein R₂ contains at least 50% by weight of unsaturated acyl groups.

4. Use according to claim 3, wherein R₂ contains at least 20% by weight of two or more double bonds.

5. Use according to any one of claims 1-4, wherein c) is lauryl sulphate, a lauryl (oxyethylene)ₙ sulphate, where n is 1-3, or lauryl sulphonate.

6. Use according to any one of claims 1-5, **characterized in that** the water has an electrolyte content of 0.3-6% by weight.

7. A drag-reducing agent, **characterized in that** it contains the components a), b) and c) as defined in claims 2-5.

8. Injection water for the treatment of oil reservoirs, **characterized in that** the water contains the components a), b) and c) as defined in claims 1-5 in a total amount of 50-400 ppm and has an electrolyte content of 0.01-7% by weight.

9. Injection water according to claim 8, **characterized in that** it contains electrolytes in an amount of 0.3-6% by weight.

10. Injection water according to claim 8 or 9, **characterized in that** the water is sea-water or production water.

## Patentansprüche

1. Verwendung eines Strömungsbeschleunigers, der Folgendes enthält:
a) ein zwitterionisches Tensid der Formel 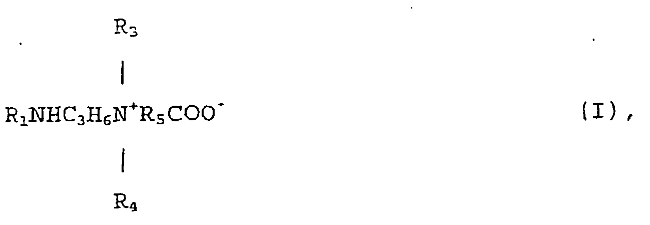 wobei R₁ eine Acylgruppe mit 12-16 Kohlenstoffatomen ist, R₃ und R₄ unabhängig voneinander eine Alkylgruppe mit 1-4 Kohlenstoffatomen oder eine Hydroxyalkylgruppe mit 2-4 Kohlenstoffatomen sind und R₅ eine Alkylengruppe mit 1-4 Kohlenstoffatomen ist, vorzugsweise CH₂ oder eine Gruppe 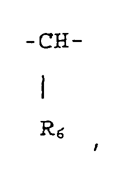 wobei R₆ eine Alkylgruppe mit 1-3 Kohlenstoffatomen ist;
b) ein zwitterionisches Tensid der Formel 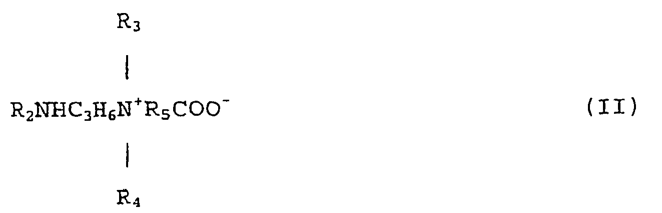 wobei R₂ eine Acylgruppe mit 18-22 Kohlenstoffatomen ist und R₃, R₄ und R₅ die oben genannten Bedeutungen haben; und
c) ein anionisches Tensid der Formeln
R₇(OA)ₙB oder R₇E
oder ein Gemisch davon, wobei R₇ eine aliphatische Gruppe mit 8-14 Kohlenstoffatomen ist, A eine Alkylengruppe mit 2-4 Kohlenstoffatomen ist, n eine Zahl von 1 bis 10 ist, B eine Sulfatgruppe OSO₃M ist, E eine Sulfatgruppe OSO₃M oder eine Sulfonatgruppe -SO₃M ist und M eine kationische, vorzugsweise einwertige Gruppe ist;
wobei das Gewicht von a), b) und c) 20-95 Gew.-%, 0-70 Gew.-% bzw. 1-50 Gew.-% beträgt, bezogen auf die Gesamtmenge von a), b) und c);
in einer Menge von a), b) und c) von 50-400 ppm in Wasser, das einen Elektrolytgehalt von 0,01-7 Gew.-% aufweist.

2. Verwendung gemäß Anspruch 1, wobei die Komponente a) und b) in einer Menge von 20-85 Gew.-% bzw. 10-70 Gew.-% vorhanden sind.

3. Verwendung gemäß Anspruch 1 oder 2, wobei R₂ wenigstens 50 Gew.-% ungesättigte Acylgruppen enthält.

4. Verwendung gemäß Anspruch 3, wobei R₂ wenigstens 20 Gew.-% zwei oder mehrere Doppelbindungen enthält.

5. Verwendung gemäß einem der Ansprüche 1-4, wobei c) Laurylsulfat, ein Lauryl(oxyethylen)ₙsulfat, wobei n 1-3 beträgt, oder Laurylsulfonat ist.

6. Verwendung gemäß einem der Ansprüche 1-5, **dadurch gekennzeichnet, dass** das Wasser einen Elektrolytgehalt von 0,3-6 Gew.-% hat.

7. Strömungsbeschleuniger, **dadurch gekennzeichnet, dass** er die Komponenten a), b) und c) enthält, wie sie in den Ansprüchen 2-5 definiert sind.

8. Injektionswasser für die Behandlung von Ölreservoirs, **dadurch gekennzeichnet, dass** das Wasser die Komponenten a), b) und c), wie sie in den Ansprüchen 1-5 definiert sind, in einer Gesamtmenge von 50-400 ppm enthält und einen Elektrolytgehalt von 0,01-7 Gew.-% hat.

9. Injektionswasser gemäß Anspruch 8, **dadurch gekennzeichnet, dass** es Elektrolyte in einer Menge von 0,3-6 Gew.-% enthält.

10. Injektionswasser gemäß Anspruch 8 oder 9, **dadurch gekennzeichnet, dass** es sich bei dem Wasser um Meerwasser oder Produktionswasser handelt.

## Revendications

1. Utilisation d'un agent réducteur de traînée contenant
a) un tensioactif zwittérionique de formule : 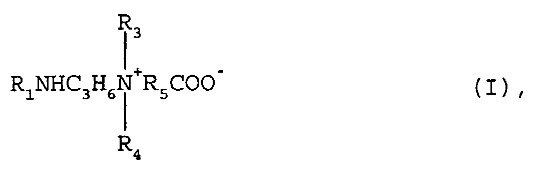
où R₁ est un groupe acyle ayant 12-16 atomes de carbone, R₃ et R₄ sont, indépendamment l'un de l'autre, un groupe alkyle ayant 1-4 atomes de carbone ou un groupe hydroxyalkyle ayant 2-4 atomes de carbone et R₅ est un groupe alkylène ayant 1-4 atomes de carbone, de préférence CH₂ ou un groupe 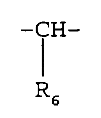
où R₆ est un groupe alkyle ayant 1-3 atomes de carbone,
b) un tensioactif zwittérionique de formule 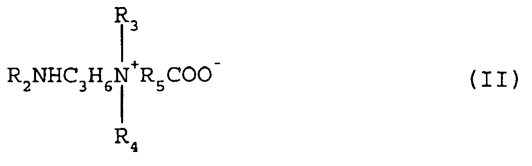
où R₂ est un groupe acyle ayant 18-22 atomes de carbone, et R₃, R₄ et R₅ ont les significations mentionnées ci-dessus, et
c) un tensioactif anionique de formule
R₇(OA)ₙB ou R₇E
ou un mélange de tels tensioactifs, où R₇ est un groupe aliphatique ayant 8-14 atomes de carbone, A est un groupe alkylène ayant 2-4 atomes de carbone, n est un nombre de 1 à 10, B est un groupe sulfate OSO₃M, E est un groupe sulfate OSO₃M ou un groupe sulfonate -SO₃M et M est un groupe cationique, de préférence monovalent ;
le poids de a), b) et c) étant de 20-95 % en poids, 0-70 % en poids et 1-50 % en poids, respectivement, par rapport à la quantité totale de a), b) et c) ;
en une quantité de a), b) et c) de 50-400 ppm dans de l'eau ayant une teneur en électrolytes de 0,01-7 % en poids.

2. Utilisation selon la revendication 1, dans laquelle les composants a) et b) sont présents en une quantité de 20-85 % en poids et de 10-70 % en poids, respectivement.

3. Utilisation selon la revendication 1 ou 2, dans laquelle R₂ contient au moins 50 % en poids de groupes acyles insaturés.

4. Utilisation selon la revendication 3, dans laquelle R₂ contient au moins 20 % en poids de deux ou plus de deux doubles liaisons.

5. Utilisation selon l'une quelconque des revendications 1-4, dans laquelle c) est le sulfate de lauryle, un sulfate de lauryle n (oxyéthyléné), où n vaut 1-3, ou le sulfonate de lauryle.

6. Utilisation selon l'une quelconque des revendications 1 à 5, **caractérisée en ce que** l'eau a une teneur en électrolytes de 0,3-6 % en poids.

7. Agent réducteur de traînée, **caractérisé en ce qu'**il contient les composants a), b) et c) tels que définis dans les revendications 2-5.

8. Eau d'injection pour le traitement de réservoirs d'huile, **caractérisée en ce que** l'eau contient les composants a), b) et c) tels que définis dans les revendications 1-5 en une quantité totale de 50-400 ppm et a une teneur en électrolytes de 0,01-7 % en poids.

9. Eau d'injection selon la revendication 8, **caractérisée en ce qu'**elle contient des électrolytes en une quantité de 0,3-6 % en poids.

10. Eau d'injection selon la revendication 8 ou 9, **caractérisée en ce que** l'eau est de l'eau de mer ou de l'eau de production.
